# EUROPÄISCHE PATENTSCHRIFT

(11) **EP 2 541 095 B1**
(45) Veröffentlichungstag und Bekanntmachung des Hinweises auf die Patenterteilung: **19.11.2014**
(21) Anmeldenummer: 11171539.7
(22) Anmeldetag: 27.06.2011
(51) Int. Cl.: F16F 15/34

(54) **Auswuchtgewicht mit aktivierbarem Klebemittel**
Balancing weight with activated adhesive
Poids pour balance avec adhésif activable

(43) Veröffentlichungstag der Anmeldung: 02.01.2013
(73) Patentinhaber: WEGMANN automotive GmbH & Co. KG, 97209 Veitshöchheim (DE)
(72) Erfinder: Wagenschein, Dietmar, 97209 Veitshöchheim (DE); Hornung, Thomas, 97072 Würzburg (DE); Bode, Felix, 97209 Veitshöchheim (DE)
(74) Vertreter: Lohr, Georg

(56) Entgegenhaltungen:
- WO-A1-95/06691
- DE-C1- 3 913 493
- DE-U1- 20 012 590
- US-A- 5 393 802
- US-A1- 2003 110 884
- US-B1- 6 413 626

## Beschreibung

Die Erfindung betrifft ein Auswuchtgewicht für Fahrzeugräder, das einen Gewichtskörper und ein Klebemittel zur Verbindung des Gewichtskörpers mit einer Felge des Fahrzeugs aufweist.

Ein gattungsgemäßes Auswuchtgewicht geht beispielsweise aus der DE 101 02 321 A1 hervor. Dort ist die Verwendung eines doppelseitigen Klebebands offenbart.

Betrachtet man den Aufbau dieses Klebebandes genauer, so stellt sich heraus, dass das Klebeband zumeist dreiteilig aufgebaut ist. Zwischen zwei Klebestreifen wird im Allgemeinen noch ein Schaumstoff angeordnet, um Unebenheiten der Felge des Fahrzeugrades, in dem das Auswuchtgewicht zum Einsatz kommt, abfangen zu können. Beim Ablösen der Auswuchtgewichte besteht dann das Problem, dass die Schaumstoffschicht reißt und der auf der Felgenseite befindliche Klebstreifen sowie einige Schaumstoffreste an der Felge verbleiben. Diese müssen dann aufwendig nachträglich entfernt werden.

Der Erfindung liegt dementsprechend die Aufgabe zugrunde, ein Auswuchtgewicht anzugeben, bei dem das Entfernen nach Gebrauch vereinfacht ist.

Zur Lösung dieser Aufgabe ist erfindungsgemäß vorgesehen, dass das Klebemittel mittels elektromagnetischer Strahlung erwärmbar ist. Dabei kann das Klebemittel einen Schaumstoff aufweisen, das eigentliche Klebemittel also zweiteilig ausgebildet sein, alternativ ist es aber genauso möglich, dass das Klebemittel einteilig und ohne Schaumstoff ausgebildet ist. Aufgrund der Erwärmbarkeit mittels elektromagnetischer Strahlung kann das Klebemittel zum Ablösen des Klebegewichts erwärmt werden, wodurch das Auswuchtgewicht mehr oder weniger rückstandsfrei von der Felge des Fahrzeugrades entfernbar ist.

Eine Erwärmung mittels elektromagnetischer Strahlung bedeutet dabei, dass die Erwärmung des Klebemittels vollzogen werden kann, ohne dass ein körperlicher Kontakt zur Wärmequelle besteht. Dabei sind sämtliche Wellenlängen inbegriffen, die zum Erwärmen verwendbar sind, insbesondere HF-Wellen, ultraviolettem Licht und Mikrowellen. Die Fahrzeuge an denen die erfindungsgemäßen Auswuchtgewichte angebracht werden können umfassen selbstverständlich Personenkraftwagen, Lastkraftwagen wie auch Motorräder und sonstige Fahrzeuge, an denen Auswuchtgewichte angebracht werden.

Vorteilhafterweise ist das Klebemittel aufgrund der Erwärmung vernetzbar oder aktivierbar. Vernetzbar bedeutet dabei, dass es seine Klebefähigkeit erst aufgrund der Erwärmung erhält. Unter Aktivierung wird dagegen verstanden, dass die Kontakt- bzw. Klebefähigkeit eines bereits festen oder auch verklebten Klebemittels wiederhergestellt wird.

Vorzugsweise enthält das Klebemittel metallische Partikel. Mit besonderem Vorteil sind die Partikel als Nanoferrite ausgebildet. Nanoferrite sind Eisenoxide, die eine große spezifische Oberfläche aufweisen. Sie sind superparamagnetisch. Mit Nanoferriten werden Ferrite bezeichnet, die eine Partikelgröße kleiner als 30nm haben. Diese ermöglichen die Erwärmung des Klebemittels, indem sie Energie aus elektromagnetischen Wechselfeldern aufnehmen und die Energie als Wärme an die Umgebung wieder abgeben. Dadurch können Klebemittel, die selbst nur sehr schlechte Mikrowellenabsorber sind, induktiv erwärmt werden.

Grundsätzlich wäre es auch möglich, den Gewichtskörper des Auswuchtgewichtes zu erwärmen und die Wärme so auf das Klebemittel zu übertragen. Aufgrund der im Gewichtskörper gespeicherten Energie würde der Aushärtvorgang des Klebemittels dann aber einen längeren Zeitraum beanspruchen als bei der Verwendung von Nanoferriten.

Die Nanoferrite können mit Magnesium oder Nickel oder Kupfer oder Zink dotiert sein.

Statt Nanoferriten oder zusätzlich zu diesen kann das Klebemittel wenigstens eine Metalleinlage aufweisen. Hierbei kann es sich entweder um eine Art rechteckige Grundplatte handeln oder auch ein Gitter oder in das Klebemittel eingearbeitete Stäbe. Die Metalleinlagen sind jeweils an die Form des Gewichtskörpers angepasst. Beispielsweise gibt es flache und gebogene Gewichtskörper. In Abhängigkeit der Form des Gewichtskörpers sind die Metalleinlagen dann ebenfalls flach oder gebogen. Die Metalleinlagen bestehen vorzugsweise aus Eisen, Stahl, Zink, Blei, einer Zinklegierung oder einer Bleilegierung. Selbstverständlich ist auch jedes andere Material verwendbar, das zur Energieaufnahme über Mikrowellen und zur Abgabe dieser Energie mittels Wärme oder auch zur Ausbildung von Wirbelströmen und dementsprechendem Wärmeintrag geeignet ist.

Vorteilhafterweise kann das Klebemittel aus einem einkomponentigen Klebstoff bestehen, der nach dem elektromagnetischen Erwärmen aktiviert ist und mit der Felge eines Fahrzeugs verbindbar ist. Es handelt sich also um einen Klebstoff, der erst nach dem Erwärmen über eine Schwellentemperatur seine Klebewirkung entfaltet. Diese Schwellentemperatur liegt zumindest über möglichen Außentemperaturen, idealerweise liegt sie etwa im Bereich von 100 ° C. Dadurch wird verhindert, dass der Klebstoff des Klebemittels im laufenden Betrieb des Kraftfahrzeugs wieder verflüssigt wird und das Auswuchtgewicht beim Betreiben des Kraftfahrzeugs verloren geht. Diese Aktivierung ist dementsprechend auch zum Lösen des Klebegewichts möglich.

Alternativ kann das Klebemittel aus einem zweikomponentigen Klebstoff bestehen, dessen Komponenten zum Vernetzen zu vermischen sind. Der Klebstoff kann bei einem Wechsel des Auswuchtgewichts dann wieder mittels elektromagnetischer Strahlung erwärmt und dadurch aktiviert werden, weshalb das Auswuchtgewicht rückstandsfrei entfernbar ist. In einer Ausgestaltung ist der zweikomponentige Klebstoff auch zum Vernetzen zu Erwärmen, d.h. dass die Vernetzungsreaktion erst bei einer vorgegebenen Temperatur aktivierbar ist.

Vorzugsweise ist das Klebemittel als Klebestreifen ausgebildet. Es weist dementsprechend eine im Wesentlichen konstante Dicke auf, unabhängig davon, ob der Gewichtskörper flach oder gekrümmt ist. Dadurch ist der notwendige Energieeintrag pro Flächenabschnitt konstant, wodurch eine gleichförmige Erwärmung des Klebemittels erreichbar ist.

In einer Ausgestaltung kann der Gewichtskörper aus einem Material bestehen, das nicht mittels elektromagnetischer Strahlung erwärmbar ist. Als derartiges Material ist beispielsweise Kunststoff bekannt. Dadurch wird die Wärme lediglich in das Klebemittel eingetragen, wodurch eine nicht immer genau vorhersagbare Wärmeabgabe durch den Gewichtskörper in das Klebemittel vermieden wird.

Alternativ kann der Gewichtskörper aus einem Material bestehen, das mittels elektromagnetischer Strahlung erwärmbar ist. Als derartige Materialien sind beispielsweise Eisen, Stahl, Zink, Blei, Zinklegierungen oder Bleilegierungen bekannt. Unter Stahl wird dabei in dieser Anmeldung auch jede Art von Edelstahl verstanden. Ein derartiger Gewichtskörper erlaubt einen schnelleren Energieeintrag, indem eine höhere Energie in der gleichen Zeit in das Auswuchtgewicht eingetragen werden kann, die dann im Gewichtskörper gespeichert wird. So ist eine längerfristige Wärmeabgabe möglich.

Weitere Vorteile, Merkmale und Einzelheiten ergeben sich aus den Figuren sowie den Ausführungsbeispielen. Dabei zeigen:
Figur 1: Ein Auswuchtgewicht in einer ersten Ausführungsform
Figur 2: Ein Auswuchtgewicht in einer zweiten Ausführungsform, und
Figur 3: Ein Auswuchtgewicht in einer dritten Ausführungsform, und
Figur 4: Ein Auswuchtgewicht in einer vierten Ausführungsform.

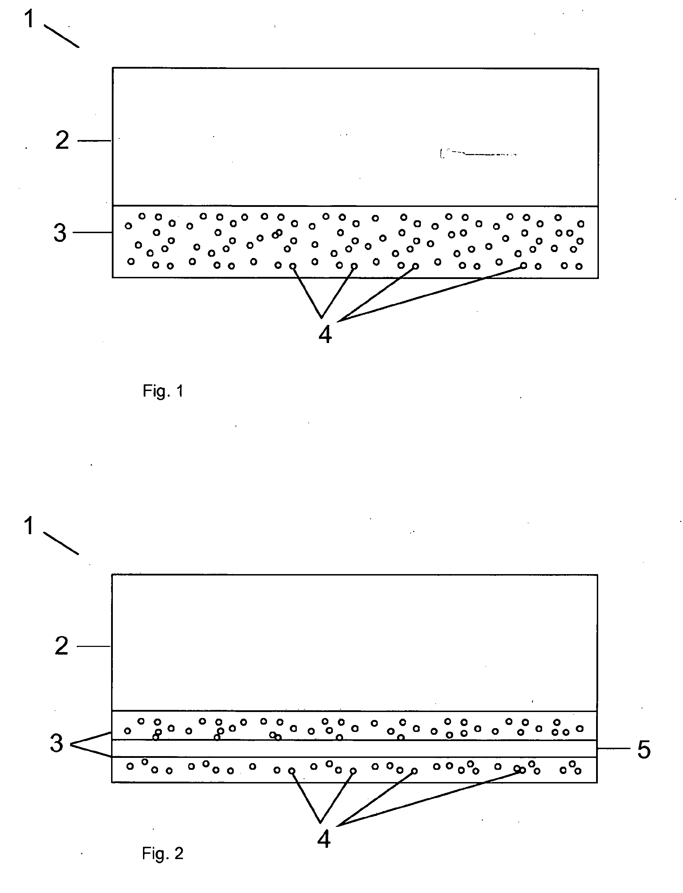

Figur 1 zeigt einen Abschnitt eines Auswuchtgewichts 1 mit einem Gewichtskörper 2 und einem Klebemittel 3. In das Klebemittel 3 sind Nanoferrite 4 eingelassen. Dabei wird eine möglichst gleichförmige Verteilung der Nanoferrite 4 in das Klebemittel 3 gewünscht. Auf der gewichtskörperabgewandten Seite des Klebemittels 3 kann zum Schutz noch eine abziehbare Folie vorhanden sein, die vor Erwärmung des Klebemittels 3 entfernt wird.

Durch das Erwärmen des Klebemittels 3 ist auch das Vorsehen eines Schaumstoffs 5 in der Mitte des Klebemittels 3 nicht mehr zwingend notwendig, aber weiterhin möglich. Eine entsprechende Ausgestaltung ist beispielsweise in Figur 2 dargestellt.

Bei dem in Figur 1 dargestellten Auswuchtgewicht ist eine Anpassbarkeit an Unebenheiten der Felge eines Fahrzeugs aber grundsätzlich bereits dadurch gegeben, dass nach dem Erwärmen des Klebemittels 3 dieses eine formbare Oberfläche aufweist und dementsprechend Unebenheiten auffängt.

Zum Erwärmen des Klebemittels 3 ist selbstverständlich eine elektromagnetische Wellen, insbesondere Mikrowellen, aussendende Vorrichtung, beispielsweise eine Spule, nötig. Die mittels der Wellen bzw. über die Spule übertragene Energie wird in den Nanoferriten 4 gespeichert, in Wärme umgewandelt und an den umgebenden Klebstoff des Klebemittels 3 abgegeben. Dadurch wird das Klebemittel 3 insgesamt erwärmt. Nach dem Erwärmen ist das Klebemittel bzw. ihr Klebstoff aktiviert und mit der Felge verbindbar, so dass nach dem Abkühlen eine feste Verbindung zwischen dem Auswuchtgewicht 1 und der Felge mittels des Klebemittels 3 entstanden ist. Als Klebstoff des Klebemittels 3 bieten sich Polyurethan- und Epoxitklebstoffe sowie Acrylklebstoffe an. Diese Aktivierung kann auch zum Entfernen des Auswuchtgewichts 1 vorgenommen werden, wodurch das Auswuchtgewicht 1 rückstandsfrei entfernbar ist.

Wie bereits ausgeführt ist das Vorsehen von Schaumstoff 5 weiterhin möglich, wobei eine derartige Schicht aber im Hinblick auf das Erwärmen des Klebemittels 3 an und für sich überflüssig geworden ist.

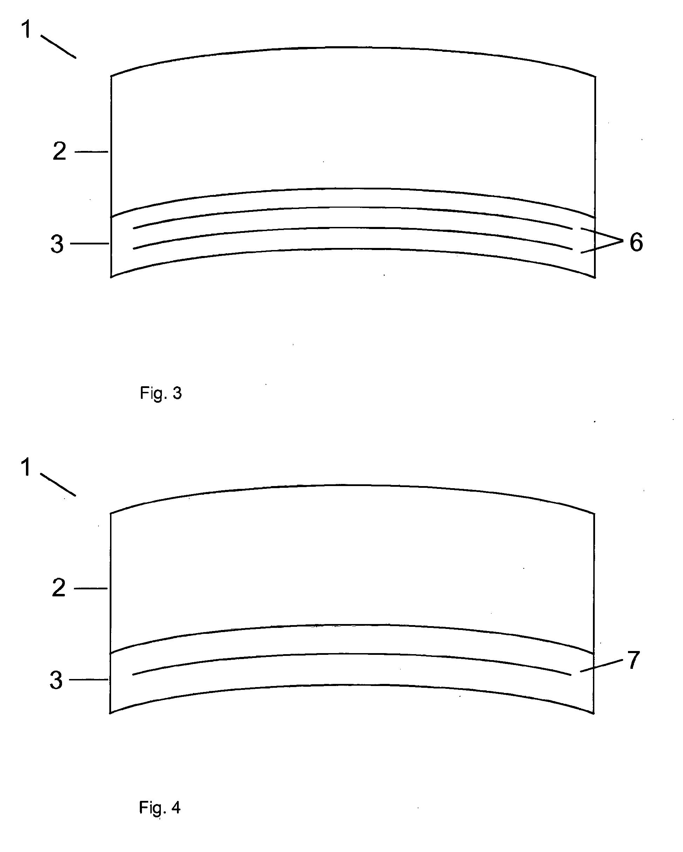

Figur 3 zeigt ein Auswuchtgewicht 1 mit einer im Querschnitt gebogenen Grundform. Das Klebemittel 3 bzw. die darin enthaltenen Metallstäbe 6 sind an diese Form angepasst und ebenfalls gebogen. In dem Klebemittel 3 befindet sich wenigstens ein Metallstab 6, es können jedoch auch mehrere Metallstäbe 6 in dem Klebemittel 3 angeordnet werden.

Statt Metallstäben 6 kann auch eine Metallplatte 7 in dem Klebemittel 3 angeordnet sein, wie Figur 4 zeigt. Die Metallplatte 7 kann geschlitzt sein, sie kann aber auch aus einem Vollkörper bestehen. Figur 4 zeigt eine im Querschnitt gebogene Form des Gewichtskörpers 2, weswegen die Metallplatte 7 im Querschnitt ebenfalls gebogen ist. Bei flacher Ausbildung des Gewichtskörpers 2 wird die Metallplatte 7 im Querschnitt ebenfalls flach ausgeführt.

Selbstverständlich können die Nanoferrite 4 auch bei gebogenen Formen des Gewichtskörpers 2 eingesetzt werden.

Durch die Erwärmbarkeit des Klebemittels 3 des Auswuchtgewichts 1 wird es einerseits möglich, das Auswuchtgewicht 1 an beliebigen Felgen von Kraftfahrzeugen zu befestigen. Andererseits lassen sich die Auswuchtgewichte 1 auch wieder rückstandsfrei entfernen.

Es sei nochmals darauf hingewiesen, dass in den Figuren 1 bis 4 lediglich Abschnitte eines Auswuchtgewichts 1 im Querschnitt dargestellt sind. Üblicherweise sind die Gewichtskörper von Auswuchtgewichten gewichtsmäßig unterteilt und hierfür mit Einkerbungen versehen. In den Figuren ist ein Abschnitt zwischen zwei derartigen Einkerbungen dargestellt.

### Bezugszeichenliste

- 1: Auswuchtgewicht
- 2: Gewichtskörper
- 3: Klebemittel
- 4: Nanoferrite
- 5: Schaumstoff
- 6: Metallstab
- 7: Metallplatte

## Patentansprüche

1. Auswuchtgewicht (1) für Fahrzeugräder, das einen Gewichtskörper (2) und ein Klebemittel (3) zur Verbindung des Gewichtskörpers (2) mit einer Felge des Fahrzeugs aufweist, **dadurch gekennzeichnet, dass** das Klebemittel (3) mittels elektromagnetischer Strahlung erwärmbar ist.

2. Auswuchtgewicht nach Anspruch 1, **dadurch gekennzeichnet, dass** das Klebemittel aufgrund der Erwärmung vernetzbar oder aktivierbar ist.

3. Auswuchtgewicht nach Anspruch 1 oder 2, **dadurch gekennzeichnet, dass** das Klebemittel (3) metallische Partikel enthält.

4. Auswuchtgewicht nach Anspruch 3, **dadurch gekennzeichnet, dass** die Partikel als Nanoferrite (4) ausgebildet sind.

5. Auswuchtgewicht nach Anspruch 4, **dadurch gekennzeichnet, dass** die Nanoferrite (4) mit Magnesium oder Nickel oder Kupfer oder Zink dotiert sind.

6. Auswuchtgewicht nach einem der vorangehenden Ansprüche, **dadurch gekennzeichnet, dass** das Klebemittel wenigstens eine Metalleinlage (6,7) aufweist.

7. Auswuchtgewicht nach Anspruch 6, **dadurch gekennzeichnet, dass** die Metalleinlage (7) eine im Wesentlichen rechteckige Grundform aufweist.

8. Auswuchtgewicht nach einem der vorangehenden Ansprüche, **dadurch gekennzeichnet, dass** das Klebemittel (3) aus einem einkomponentigen Klebstoff besteht, der nach dem Erwärmen aktiviert ist und mit der Felge eines Fahrzeugs verbindbar ist.

9. Auswuchtgewicht nach einem der Ansprüche 1 bis 7, **dadurch gekennzeichnet, dass** das Klebemittel (3) aus einem zweikomponentigen Klebstoff besteht, dessen Komponenten zur Vernetzung zu vermischen sind.

10. Auswuchtgewicht nach einem der vorangehenden Ansprüche, **dadurch gekennzeichnet, dass** das Klebemittel (3) als Klebestreifen ausgebildet ist.

11. Auswuchtgewicht nach einem der vorangehenden Ansprüche, **dadurch gekennzeichnet, dass** der Gewichtskörper (2) aus einem Material, insbesondere Kunststoff, besteht, das nicht mittels elektromagnetischer Strahlung erwärmbar ist.

12. Auswuchtgewicht nach einem der Ansprüche 1 bis 10, **dadurch gekennzeichnet, dass** der Gewichtskörper (2) aus einem Material, insbesondere Stahl oder Zink oder einer Zinklegierung oder Blei oder einer Bleilegierung, besteht, das mittels elektromagnetischer Strahlung erwärmbar ist.

## Claims

1. A balancing weight (1) for vehicle wheels, which has a weight body (2) and an adhesive means (3) for bonding the weight body (2) to a rim of a vehicle, **characterized in that** the adhesive means (3) is heatable by means of electromagnetic radiation.

2. The balancing weight according to claim 1, **characterized in that** the adhesive means is cross-linkable or activatable due to the heating.

3. The balancing weight according to claim 1 or 2, **characterized in that** the adhesive means (3) comprises metallic particles.

4. The balancing weight according to claim 3, **characterized in that** the particles are configured as nanoferrites (4).

5. The balancing weight according to claim 4, **characterized in that** the nanoferrites (4) are doped by magnesium or nickel or copper or zinc.

6. The balancing weight according toone of the preceding claims, **characterized in that** the adhesive means comprises at least one metal inlay (6, 7).

7. The balancing weight according to claim 6, **characterized in that** the metal inlay (7) has a substantially rectangular shape.

8. The balancing weight according to one of the preceding claims, **characterized in that** the adhesive means (3) comprises of a single-component adhesive, which is activated after the heating and is bondable to the rim of a vehicle.

9. The balancing weight according to one of claims 1 to 7, the adhesive means (3) consists of a two-component adhesive, whose components are to be mixed for the cross-linking.

10. The balancing weight according to one of the preceding claims, **characterized in that** the adhesive means (3) is configured as an adhesive strip.

11. The balancing weight according to one of the preceding claims, **characterized in that** the weight body (2) consists of a material, in particular plastic, which is not heatable by means of electromagnetic radiation.

12. The balancing weight according to one of claims 1 to 10, **characterized in that** the weight body (2) consists of a material, in particular steel or zinc or a zinc alloy or lead or a lead alloy, which is heatable by means of electromagnetic radiation.

## Revendications

1. Masse d'équilibrage (1) pour roues de véhicule comportant un poids (2) et un moyen adhésif (3) pour relier le poids (2) à une jante du véhicule, **caractérisée en ce que** le moyen adhésif (3) peut être chauffé au moyen d'un rayonnement électromagnétique.

2. Masse d'équilibrage selon la revendication 1, **caractérisée en ce que** le moyen adhésif peut être polymérisé ou activé sous l'effet du chauffage.

3. Masse d'équilibrage selon la revendication 1 ou 2, **caractérisée en ce que** le moyen adhésif (3) contient des particules métalliques.

4. Masse d'équilibrage selon la revendication 3, **caractérisée en ce que** les particules sont conformées comme des nanoferrites (4).

5. Masse d'équilibrage selon la revendication 4, **caractérisée en ce que** les nanoferrites (4) sont dopées avec du magnésium ou du nickel ou du cuivre ou du zinc.

6. Masse d'équilibrage selon l'une des revendications précédentes, **caractérisée en ce que** le moyen adhésif contient au moins une inclusion métallique (6, 7).

7. Masse d'équilibrage selon la revendication 6, **caractérisée en ce que** l'inclusion métallique (7) présente une forme sensiblement rectangulaire.

8. Masse d'équilibrage selon l'une des revendications précédentes, **caractérisée en ce que** le moyen adhésif (3) se compose d'une colle monocomposant qui est activée après le chauffage et qui peut être liée à la jante d'un véhicule.

9. Masse d'équilibrage selon l'une des revendications 1 à 7, **caractérisée en ce que** le moyen adhésif (3) se compose d'une colle bicomposant dont les composants doivent être mélangés pour polymériser.

10. Masse d'équilibrage selon l'une des revendications précédentes, **caractérisée en ce que** le moyen adhésif (3) est conformé comme une bande adhésive.

11. Masse d'équilibrage selon l'une des revendications précédentes, **caractérisée en ce que** le poids (2) se compose d'un matériau, en particulier de matière plastique, qui ne peut pas être chauffé au moyen d'un rayonnement électromagnétique.

12. Masse d'équilibrage selon l'une des revendications 1 à 10, **caractérisée en ce que** le poids (2) se compose d'un matériau, en particulier d'acier ou de zinc ou d'un alliage de zinc ou de plomb ou d'un alliage de plomb, qui peut être chauffé au moyen d'un rayonnement électromagnétique.
